# EUROPEAN PATENT APPLICATION

(11) **EP 2 555 152 A1**
(43) Date of publication of application: **06.02.2013**
(21) Application number: 11765281.8
(22) Date of filing: 22.02.2011
(51) Int. Cl.: G06Q 40/00

(54) **FUND TRANSFER INFORMATION PRESENTATION SYSTEM**

(30) Priority: 31.01.2011 JP 2011017761; 02.04.2010 JP 2010085782
(71) Applicant: Data Forevision, Ltd, Tokyo 104-0045 (JP)
(72) Inventor: OHKUBO,Yutaka, Tokyo 104-0045 (JP); MORIYA,Kazuhiro, Tokyo 104-0045 (JP); KATO,Shinsuke, Tokyo 104-0045 (JP)
(74) Representative: Emerson, Peter James
(86) International application number: PCT/JP2011/053785
(87) International publication number: WO 2011/125379

(57) **Abstract**

Disclosed is a fund transfer information presentation system which is capable of suitably tracking deposit asset trends for a client in order to maintain and strengthen reliable and efficient financing capability which is the source of maximum profit for a bank and is required for securing management gains for not only the conventional asset-side but also for the liability-side. Transaction histories within a period specified by parameters are subject to name identification by client and chronologically ordered (301). Thereafter, they are separated into deposits and withdrawals (302), wherein the deposit and withdrawal transactions are split into ranges wherein individual transaction amounts match and matching transactions are associated one-to-one (303), and the one-to-one correspondences of the deposit and withdrawal transactions are arranged in order of time of occurrence to generate Fund transfer details between products by client (304).

## Description

### TECHNICAL FIELD

The present invention relates to a fund transfer information presentation system which produces a "visualization" of the preferences and needs of financial transactions and deposit asset trends for a client, which enables naturally colorless funds to be seen as colored, in the scope of upgrading client management and Asset Liability Management (especially liability management) of financial institutions. Said visualization is achieved by importing transaction information from a core banking system or the like (including an informational system, hereinafter the same shall apply in the following paragraphs) and conducting name identification by client (including household, hereinafter the same shall apply in the following paragraphs) for the imported transaction information.

### BACKGROUND ART

A deposit spread is defined as an interest differential between a market interest rate and a deposit interest rate. The deposit spread started to shrink in about 1990, and reached almost zero by the end of the nineties, at a time when the market interest rate approached zero. In contrast, a loan spread is defined as an interest differential between a loan interest rate and a market interest rate, which had been fluctuating in negative values, and started to increase in 1991 causing the source of profit (loan-deposit spreads) to shift from the deposit spread to the loan spread. Consequently, operations of Asset Liability Management (hereinafter referred to as ALM) which enables a total management of assets and liabilities started to give a preference to focusing on profit increase arising out of assets, over those of liabilities.

Accordingly, for example in Patent Document 1, it is disclosed a system which enables one to make inquiries of transaction information for use in analyzing the portfolio at a given point in time or given short/long period of time, for the purpose of maximizing the returns (profit) arising out of the total assets of financial institutions, contrary to the conventional way of making inquiries operated with periodical cycles on a long-term basis, for example every fiscal term, monthly, etc.
Further, in Patent Document 2, there is disclosed a method of indicating portfolio information on a graph with axes of risk rate and profit rate which enables users to understand the presentation without difficulty, contrary to the conventional method operated with numerical numbers.

However, the source of maximum profit for a bank is a reliable, low-interest financing capability. In this respect, it is necessary to maintain and expand the client base by appropriately perceiving preferences and needs of financial transactions by a client which is followed by developing and offering the client suitable products/services. Further, it is expected that the deposit spread defined as the interest differential between the market interest rate and the deposit interest rate will be normalized in the future, and that the market interest rate will rise. Because securing gains in credit business tends to be difficult these days due to the stagnant corporate lending and housing loans facing increased competition, the result is that securing gains arising out of the deposit spread is important. In addition, management of deposit assets from the perspective of asset building for a client is also important, bringing in commission incomes from sales of investment funds or insurance products or the like, in view of diversifying asset building methods for a client. Thus, securing reliable and efficient financing capability and increasing management gains are required, which is obtained by estimating the needs of prospective clients and predicting changes in the financial environment, followed by appropriate action. In this respect, not only is it required to perceive the preferences and needs of a client's financial transactions by a client, and track the increase/decrease and transfer histories of a client's deposit assets, but it is also required to grasp, analyze and monitor whole transaction elements from a variety of angles, by accumulating client information data by categories such as age, sex, an attribution like region, product, and period.

### PRIOR ART PATENT DOCUMENTS

Patent Document 1: Japanese Patent Application Laid-Open No. 2003-281360
Patent Document 2: Japanese Patent Application Laid-Open No. 2002-297894

### SUMMARY OF THE INVENTION

### TECHNICAL PROBLEMS

To solve the problems described above, the fund transfer information presentation system of the present invention enables one to perceive the preferences and needs of financial transactions by a client while concurrently tracking the increase/decrease and transfer histories of the deposit assets by the client, which is required for the management of not only the conventional asset-side but also of the liability-side, resulting in the securing of reliable, low-interest financing capability which is the source of maximum profit for a bank. Also it enables one to analyze the entire deposit assets from a variety of angles which is thereafter followed by monitoring, so that one is capable of suitably tracking the deposit asset trends for a client.

### SOLUTION TO PROBLEM

In order to solve the problems shown above, the fund transfer information presentation system of the present invention contains features defined as follows:
First, the output journal logs are imported from the core banking system. Second, the deposit and withdrawal transactions are extracted from the journal logs within a specified period. Said deposit and withdrawal transactions are subject to name identification by client, which is followed by one-to-one chronological matching of deposit transaction data and withdrawal transaction data within the ranges wherein individual transaction amounts match. And finally, fund transfer details between products are generated wherein a product name of a withdrawal transaction is stated as a fund source for a financial product purchase, a product name of a deposit transaction is stated as a beneficiary of financial product disposal, and a transfer amount is stated as a transaction amount, which produces "visualization" of deposit asset trends for a client.

### ADVANTAGEOUS EFFECTS OF INVENTION

The present invention produces the "visualization" of deposit asset trends for a client, by importing the eventual output journal logs of actual client transaction data from the core banking system, eventually generating fund transfer details between products wherein a product name of a withdrawal transaction is stated as a fund source for a financial product purchase, a product name of a deposit transaction is stated as a beneficiary of financial product disposal, and a transfer amount is stated as a transaction amount.
Consequently, it is possible to perceive preferences and needs of financial transactions and deposit asset trends for a client in accurate details on a timely basis, giving operational management the ability to secure reliable and efficient financing capability.

### BRIEF DESCRIPTION OF THE DRAWINGS

[Figure 1] Figure 1 is a configuration diagram of the fund transfer information presentation system when carried out the present invention.
[Figure 2] Figure 2 is a data-flow chart of the computer program association function based on attribute-linked fund transfer.
[Figure 3] Figure 3 is a data-flow chart of the computer program association function based on logical fund transfer.
[Figure 4] Figure 4 is a flow chart of the processing wherein transaction histories are separated into deposits and withdrawals.
[Figure 5] Figure 5 is a flow chart of the process for generating fund transfer details.
[Figure 6] Figure 6 is a data-flow chart of another round of the association based function.
[Figure 7] Figure 7 is a flow chart of another round of the computer program association function.
[Figure 8] Figure 8 is a data-flow chart of the two-step computer program association function.
[Figure 9] Figure 9 is a flow chart of the two-step computer program association function.

### DETAILED DESCRIPTION OF THE INVENTION

Hereinafter, embodiments of this invention will be explained in detail.

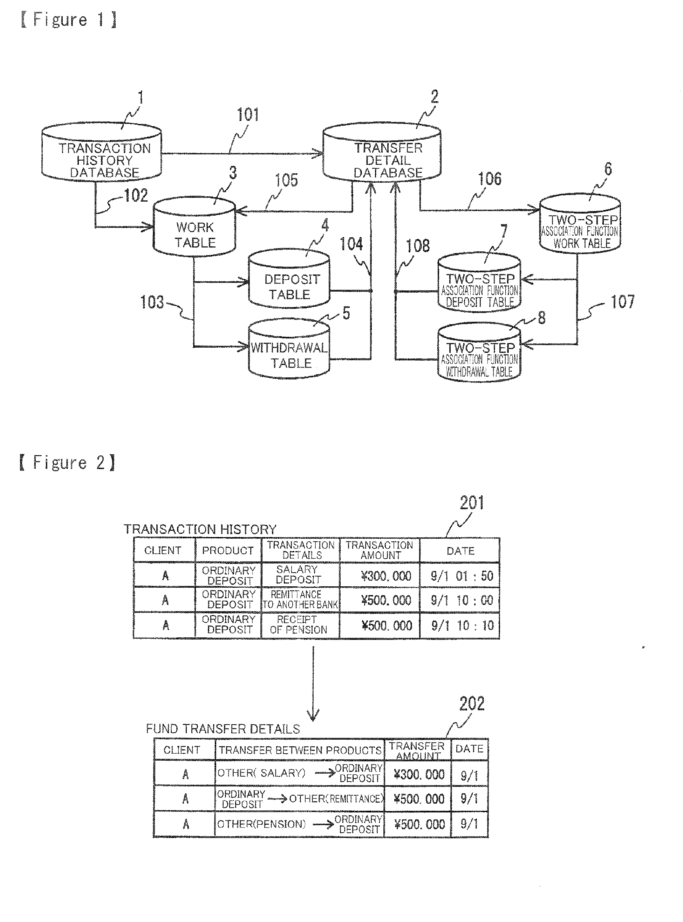

Figure 1 shows a configuration diagram of the fund transfer information presentation system when carried out the present invention. First, Transaction history database 1 is entered so that target transaction data for the computer program association function based on attribute-linked fund transfers by the client within a specified period are extracted, thereafter the results of the said association function are output to Transfer detail database 2 (101). One may set a single day as a specified period, since bank transactions are completed on a daily basis. Moreover, said period can be specified by entering a parameter value by a user. While a single day may be set as a specified period, it is preferred to be set to two days, that is, a single day with the day after (the next day), so that an another round of the association function which described later is to be conducted. In another embodiment, a week may be set as a specified period. Although a plurality of clients can be included in parallel when an association function is conducted, a case with a single client will be explained hereinafter.

The following refers to transactions within a single bank account of a client. When the client holds more than one bank account, they can be treated as a combined one. That is, in the present system, a client can be identified not only by a single bank account but also by a plurality of bank accounts which belong to the client.

Transaction history database 1 stores journal logs (transaction histories) of the deposit/withdrawal information of the client. This information comes from the core banking system wherein ordinary transactions such as account related proceedings of the bank are dealt with. Specifically, transaction history database 1 stores transaction data, wherein each of the data transactions contains a client name, an account type, a distinction of deposit/withdrawal, a transaction amount, a transaction date, a detail of the transaction, and the like. The detail of the transaction may be, for example, a direct deposit of salary, a remittance to another bank (both incoming remittance and outward remittance), a receipt of public pension payments, a public utility bill payment, and the like. Further, said database 1 comprises various types of indexed files so that the stored data can be connected with each other and appropriate corrections can be made, concurrently with a simple memorizing means therein which stores various data in a preset data format.

Said computer program association function based on attribute-linked fund transfer represents a fund transfer whose detail is settled by a single transaction relating to some particular transaction such as a direct deposit of salary, or a remittance to another bank or the like. The present system extracts particular transactions which can be targeted for the computer program association function based on attribute-linked fund transfer from the entire transaction data. That is, a particular transaction which is a part of the preset particular transactions is to be identified by the transaction data, since it contains the specific data which settles the detail of the transaction therein. If necessary, it is possible to create a table of the detailed data by which the target data for the computer program association function based on attribute-linked fund transfer is to be identified, so that the actual target data for the said association function based on attribute-linked fund transfer is determined by comparing the actual transaction data and the stored data within the said table.

As shown in Figure 2, the computer program association function based on attribute-linked fund transfer is conducted within a period specified by parameters, by arranging the target transaction histories which are subject to name identification by client in chronological order (201), leading to generate fund transfer details between products by client (202) by rearranging the individual transactions in order of time of occurrence.

Figure 1 also shows when Transaction history database 1 is entered so that target transactions for the computer program association function based on logical fund transfer within a specified period are extracted by client and the results are output to Work table 3 with some necessary information added thereto (102). When a transaction is the embodiment of the logical fund transfer, inevitably it means the transaction is not targeted for the association function based on attribute-linked fund transfer. Herein, the computer program association function based on logical fund transfer is defined as a processing wherein details are produced by associating a plurality of transactions of the client in order of time of occurrence.

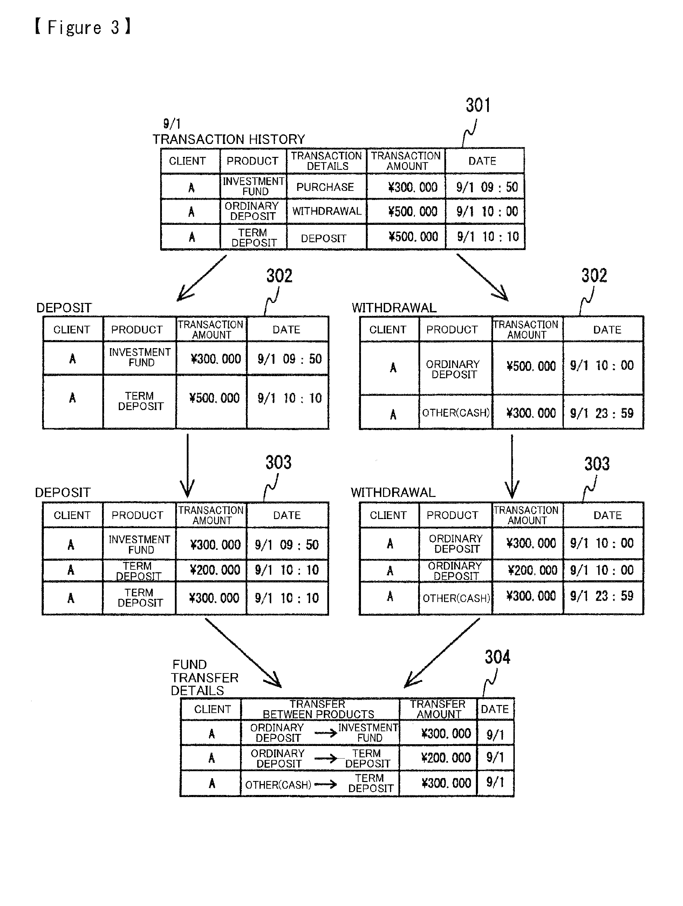

As shown in Figure 3, in the processing of the computer program association function based on logical fund transfer, transaction histories within a period specified by parameters are subject to name identification by client and chronologically ordered (301), separated into deposits and withdrawals (302), the deposit and withdrawal transactions are split into ranges wherein individual transaction amounts match and matching transactions which are equivalent amount are associated one-to-one (303), and the one-to-one correspondences of the deposit and withdrawal transactions are arranged in order of time of occurrence so as to generate fund transfer details between products by client (304).

Referring now to Figure 1, the transaction data output to Work table 3 are split into deposits (balance-increasing transactions) and withdrawals (balance-decreasing transactions), so that each of them is to be output either to Deposit table 4 or to Withdrawal table 5 (103) . At this stage, the total amounts of the deposits and the withdrawals are compared so that the differential value between the two amounts is allocated to the side with the least value of the amount as a dummy transaction amount for a dummy data (other), in order to balance the total amount of deposits and withdrawals. Herein, (other) is deemed to be a cash transaction. As a result, the total amounts of the deposits and the withdrawals within a specified period are to be equally-balanced due to the added dummy deposit/withdrawal data (other) . Said balancing process is conducted for the target data for the computer program association function based on logical fund transfer.

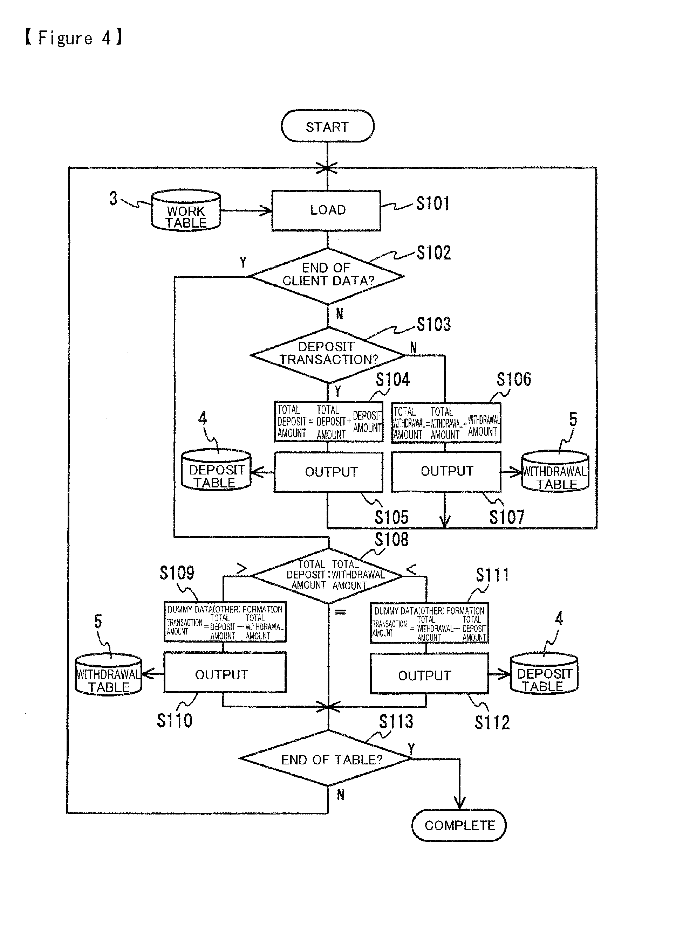

As shown in Figure 4, the above processing is conducted as follows: First, the transaction data is loaded from Work table 3 (S101), and second it is determined whether or not the end of data of the client (S102), and if not considered to be the end data of the client, then determined whether or not it is a deposit transaction (S103). On the other hand, if it is considered to be the end data of the client, the deposit value is added to the total deposit amount (S104). And finally, the transaction data is output to Deposit table 4 (S105), which is followed by the stage S101 to load the next transaction data thereafter.

At the stage of S103, if it is not considered to be a deposit transaction, the withdrawal value is added to the total withdrawal amount (S106), then the transaction data is output to Withdrawal table 5 (S107), which is followed by the stage S101 to load the next transaction data thereafter.

At the stage of S102, if considered to be the last data of the client, the total deposit amount and the total withdrawal amount are compared (S108), in order to form a dummy data (other) which defined as follows:
When the total deposit amount > the total withdrawal amount, the dummy data is formed to be "the transaction amount = the total deposit amount - the total withdrawal amount" (S109) . Thereafter, the formed dummy data is output to Withdrawal table 5 (S110), which followed by the stage S113.
When the total deposit amount < the total withdrawal amount, the dummy data is formed to be "the transaction amount = the total withdrawal amount - the total deposit amount" (S111) . Thereafter, the formed dummy data is output to Deposit table 4 (S112), which followed by the stage S113.
When the total deposit amount = the total withdrawal amount, no dummy data is formed. Instead, it is determined whether or not it is the end of Work table 3 (S113), and if it is not considered to be the end, then it is followed by the stage S101 and the next transaction data is loaded. On the other hand, if it is determined to be the end, then the proceeding is completed.
Herein, the formed dummy data (other) is preferred to be considered as a cash deposit or a cash withdrawal.
As a result, the deposit/withdrawal transaction data of the client which are stored in Work table 3 within a specified period are output either to Deposit table 4 or to Withdrawal table 5, in the form of equally-balanced.

Referring again to Figure 1, the deposit and withdrawal transactions are split into ranges wherein individual transaction amounts match and matching transactions are associated one-to-one, and the one-to-one correspondences of the deposit and withdrawal transactions are output to Fund transfer detail database 2 (104) as fund transfer details between products by client. As a result, fund transfer details between products within a specified period are generated, wherein the transactions are targeted for the computer program association function based on logical fund transfer out of the journal logs.

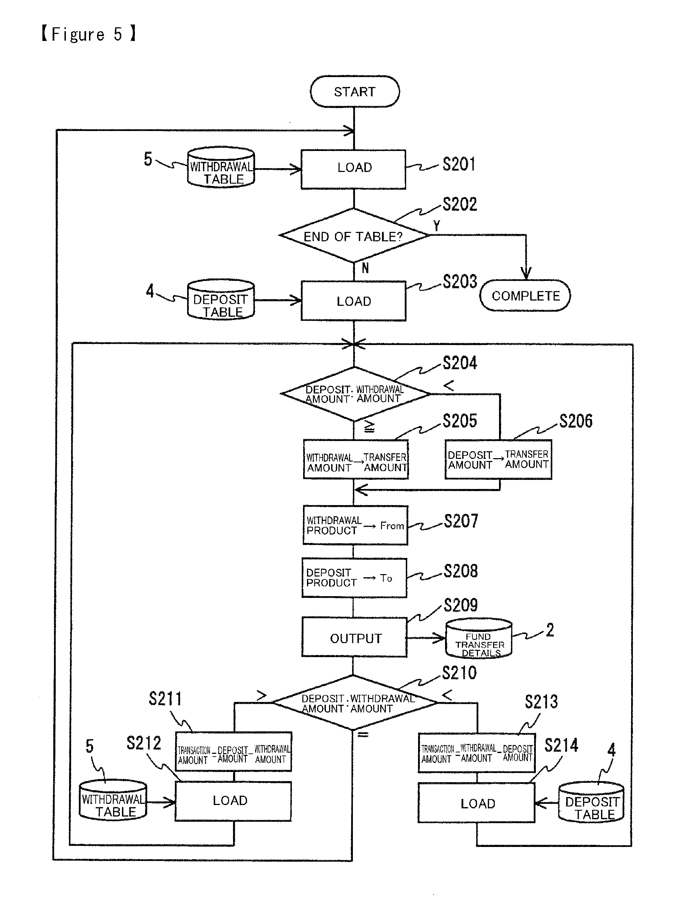

Figure 5 shows a computer program process flow for generating fund transfer details. According to Figure 5, first a transaction data is loaded from the Withdrawal table 5 to be stored in a memory on the withdrawal side (S201). Second, it is determined whether or not the transaction data is the end of Withdrawal table 5 (S202), and if it is considered to be the end, then the processing is complete. On the other hand, if it is not considered to be the end, another transaction data is loaded from Deposit table 4 to be stored in a memory on the deposit side (S203).

Next, the deposit amount and the withdrawal amount are compared (S204). In the case when the deposit amount ≧ the withdrawal amount, the withdrawal amount is set as the "transfer amount" of the fund transfer detail (S205) . On the other hand, when the deposit amount < the withdrawal amount, the deposit amount is set as the "transfer amount" of the fund transfer detail (S206).

Then, the product name of the withdrawal transaction is set to the "from" side of the fund transfer detail (S207), and the product name of the deposit transaction is set to the "to" side of the fund transfer detail (S208) . Thereafter, the generated fund transfer detail is output to fund transfer detail database 2 (S209).

Further, the deposit amount and the withdrawal amount are compared (S210), in order to change the transaction amount defined as follows:
When the deposit amount > the withdrawal amount, the transaction amount of the deposit-side memory is changed to be "the transaction amount = the deposit amount - the withdrawal amount" (S211). Thereafter, the next data is loaded from Withdrawal table 5 to be stored in the withdrawal-side memory (S212), which is followed by the stage S204.
When the deposit amount < the withdrawal amount, the transaction amount of the withdrawal-side memory is changed to be "the transaction amount = the withdrawal amount - the deposit amount" (S213) . Thereafter, the next data is loaded from Deposit table 4 to be stored in the deposit-side memory (S214), which is followed by the stage S204.
When the deposit amount = the withdrawal amount, no change is to be made and directly followed by the stage S204.
Thus, the process of building corresponding relationships (i.e. matching) is conducted sequentially in order of time of occurrence for the output transaction data which is stored in Deposit table 4 and Withdrawal table 5. As described above, the amounts of deposit/withdrawal are equally-balanced inevitably due to the added dummy data. Therefore, the matching of the transaction data within Deposit table 4 and Withdrawal table 5 is completed since the total deposit amount = the total withdrawal amount, which generates the completion of the fund transfer details.

Referring again to Figure 1, a transaction which is already stored in Fund transfer detail database 2 is also used as a target transaction for either another round of the computer program association function or the two-step computer program association function, when the transaction date applies to the specified period for the association function. In the processing of another round of the computer program association function, the fund transfer data are split into deposit transactions and withdrawal transactions and output to Work table 3 (105). Thereafter, the split transactions are transformed to deposit transaction data and withdrawal transaction data, which are inserted into either Deposit table 4 or Withdrawal table 5 respectively (103). In the processing of the two-step computer program association function, the fund transfer data are split into deposit transactions and withdrawal transactions and output to Two-step association function work table 6 (106). Thereafter, the split transactions are transformed into deposit transaction data and withdrawal transaction data, which are then inserted into either Two-step association function deposit table 7 or Two-step association function withdrawal table 8 respectively (107).

Herein, another round of the computer program association function is defined as the process wherein re-matching is conducted within the extended period specified by the present parameter, with regard to the transaction which is defined as "other" due to the lack of a target transaction to be matched thereto.
For example, explained below is a case when the parameter value is set to two days and is concurrently followed by the processing of the daily computer program association function based on logical fund transfer. In this instance, the processing of the computer program association function based on logical fund transfer of a day is to be completed at the end of the following day, by matching the transaction defined as "other" on the first day to the transaction of the second day.
As described above, in the processing by another round of the computer program association function, the computer program association function based on logical fund transfer is conducted such that the two-day transaction data are output collectively either to Deposit table 4 or to Withdrawal table 5 and the dummy data "other" is formed by the differential value between the two-day deposit/withdrawal transactions. This processing enables one to re-match the transaction defined as "other" on the first day to the transaction of the second day."

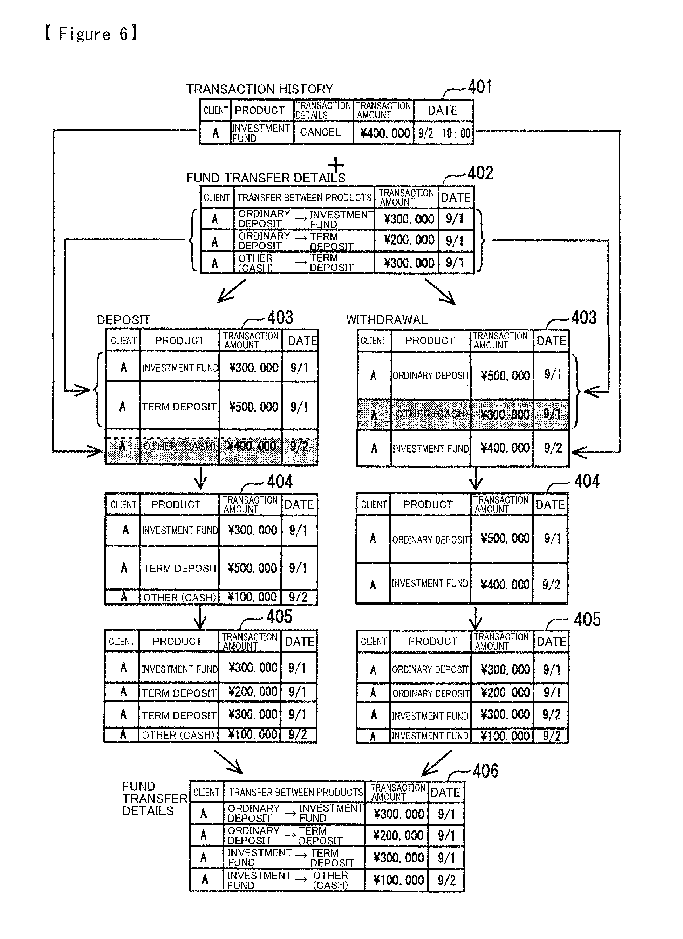

Further a case of client A is explained in detail by referring to Figure 6. First, the transaction history within a period specified by the parameter (401) is integrated with the formerly generated fund transfer details within the same specified period (402), thereafter the whole transactions are arranged in chronological order and separated into deposits and withdrawals (403) . When there is a transaction defined as "other (¥300,000)" in the former fund transfer details (402), said transaction is matched to the present transaction history (401) "other (¥400, 000)" so as to be offset by value. Thereafter, the remainder of difference (¥100, 000) is allocated to the deposit side as "other (¥100,000)" (404). Then the deposit and withdrawal transactions are split into ranges wherein individual transaction amounts match and matching transactions are associated one-to-one (405), and the one-to-one correspondences of the deposit and withdrawal transactions are arranged in order of time of occurrence so as to generate fund transfer details between products by client (406).

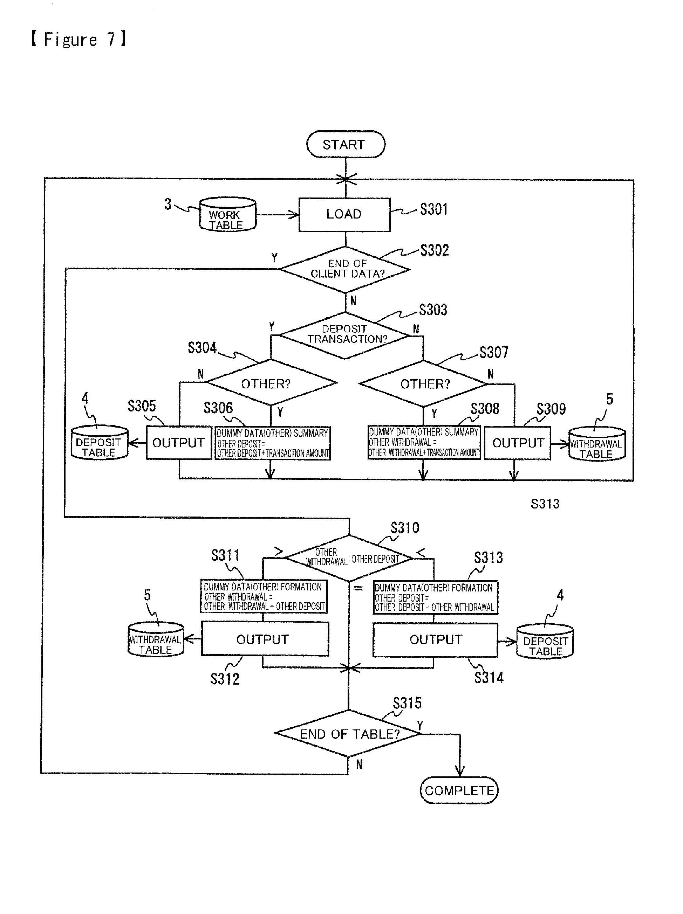

As shown in Figure 7, this processing is conducted as follows: First a withdrawal transaction data is loaded from Work table 3 (S301), and second it is determined whether or not the transaction data is the end of Work table 3 (S302), and if considered to be the end, then the processing is complete. On the other hand, if the transaction data is not considered to be the end, it is determined whether or not the transaction data is categorized as "other" (S303). If not categorized as "other", the data is output to the Withdrawal table 5 directly (S304), which is followed by the stage S301 to load the next transaction data.

The following process is further explained by referring to Figure 7. First a transaction data is loaded from Work table 3 (S301). Second it is determined whether or not the transaction data is the end of data of the client (S302). If not considered to be the end data of the client, it is determined whether or not it is a deposit transaction (S303), and if considered to be a deposit transaction, then it is determined whether or not it is categorized as "other" (S304). If not categorized as "other", the transaction data is output to Deposit table 4 (S305), which is followed by the stage S301 to load the next transaction data. At the stage of S304, if categorized as "other", then the transaction data is set to be "other deposit = other deposit + transaction amount" (S306), which is followed by the stage S301 to load the next transaction data.

At the stage of S303, if the transaction data is categorized as "other", another transaction data is loaded form Work table 3 (S305), and it is determined whether or not the transaction data is the end of data of the client (S306), and if considered to be the end data of the client, then it is followed by the stage S301 to load the next transaction data. On the other hand, if it is not considered to be the end data of the client, then it is determined whether or not it is categorized as "other" (S307), and if not categorized as "other", the transaction data is output to Deposit table 4 directly (S308), which is followed by the stage S305 to load the next transaction data from Work table 3. At the stage of S303, if the transaction data is not considered to be a deposit transaction, then it is determined whether or not the transaction data is categorized as "other" (S307), and if it is not categorized as "other", the transaction data is output to Withdrawal table 5 (S309), which is followed by the stage S301 to load the next transaction data. At the stage of S307, if the transaction data is categorized as "other", then the transaction data is set to be "other withdrawal = other withdrawal + transaction amount" (S308), which is followed by the stage S301 to load the next transaction data.

At the stage of S307, if the transaction data is categorized as "other", then the deposit amount and the withdrawal amount are compared (S309). In order to change the transaction amount in this situation is defined as follows:
When the deposit amount > the withdrawal amount, the transaction amount "other" is changed to be "the transaction amount = the deposit amount - the withdrawal amount" (S310). Thereafter, the changed transaction amount is output to Deposit table 4 (S311), which is followed by the stage S305 to load the next transaction data from Deposit table 4.
When the deposit amount < the withdrawal amount, the transaction amount "other" is changed to be "the transaction amount = the withdrawal amount - the deposit amount" (S312). Thereafter, the changed transaction amount is output to Withdrawal table 5 (S313), which is followed by the stage S305 to load the next transaction data from Deposit table 4.
When the deposit amount = the withdrawal amount, it is followed by the stage S305 directly to load the next transaction data from Work table 3.
At the stage of S302, if the transaction data is determined as the end of data of the client, then the "other" deposit amount and the "other" withdrawal amount are compared (S310), in order to form a dummy data defined as follows:
When the other-withdrawal amount > the other-deposit amount, the dummy data (other) is formed to be "the other-withdrawal amount = the other-withdrawal amount - the other-deposit amount" (S311) . Thereafter, the formed dummy data is output to Withdrawal table 5, which is followed by the stage S315.
When the other-withdrawal amount < the other-deposit amount, the dummy data (other) is formed to be "the other-deposit amount = the other-deposit amount - the other-withdrawal amount" (S313). Thereafter, the formed dummy data is output to Deposit table 4, which is followed by the stage S315.
When the other-withdrawal amount = the other-deposit amount, it is determined whether or not it is the end of Work table 3 (S315), and if not considered to be the end, then it is followed by the stage S301 to load the next transaction data. On the other hand, if it is considered to be the end, then the processing is to be completed.

As described above, transactions within a specified period (e.g. two days) for another round of the computer program association function are output to either Deposit table 4 or Withdrawal table 5, wherein a single dummy data within the same specified period is to be added. Accordingly, the dummy data that is formed on the first day is to be deleted, and the dummy data that is formed on the second day is to be kept. In sum, the fund transfer details of the first day are settled by the processing as follows:
The transactions are output to either Deposit table 4 or Withdrawal table 5 and are matched in accordance with the processing shown in Figure 5. Accordingly, the two-day fund transfer details are formed, and the processing of another round of the computer program association function is to be completed so that the fund transfer details of the first day can be fixed. Herein, it is possible to load the two-day transaction data from the journal logs which is followed by the processing shown in Figure 4 and Figure 5, instead of conducting another round of the computer program association function. In regard to the specified period for the association function or another round of the association function, it is possible to set a longer period if required.

Moreover, the two-step computer program association function is defined as iteration processing of the association function in order to reorganize the fund transfer details so that they are more simplified. For example, when shifting funds from term deposit to investment fund, it is common to deposit funds into a deposit combined account for settlement for purchasing purposes. In this respect, two types of association functions are needed, that is, "term deposit → ordinary deposit" and "ordinary deposit → term deposit". However, the association function "term deposit → investment fund" is to be realized, by conducting the computer program association function again for each ordinary deposit. It is common to deposit funds into a deposit combined account for settlement in which the funds only pass through (including settlement-expected products, hereinafter the same shall apply in the following paragraphs). In this respect, two types of association functions are needed, that is, "term deposit → ordinary deposit" and "ordinary deposit → term deposit". However, the association function "term deposit → investment fund" is to be realized, by conducting the computer program association function again for each ordinary deposit. In this way, the fund transfer details are simplified, since the products in which the funds only pass through and are practically meaningless are deleted.

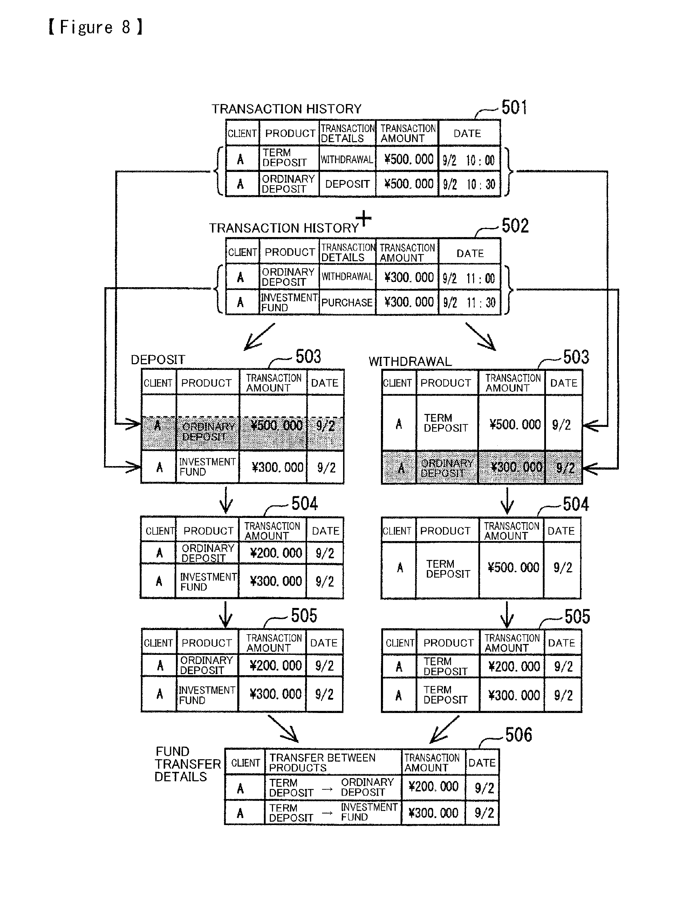

The following is further explained by specifically referring to Figure 8. First, the transaction history wherein the beneficiary is set to "ordinary deposit" (501) is added to the transaction history wherein the fund source is set to "ordinary deposit" (502), thereafter all of the transactions are arranged in chronological order and separated into deposits and withdrawals (503) . The data "ordinary deposit (¥500,000)" on the deposit side and the data "ordinary deposit (¥300,000)" on the withdrawal side are matched so as to be offset by value, thereafter the remainder "ordinary deposit (¥200,000)" is allocated to the deposit side as a positive quantity (504). The deposit and withdrawal transactions are divided into ranges wherein individual transaction amounts match and matching transactions are associated one-to-one (505), and the one-to-one correspondences of the deposit and withdrawal transactions are arranged in order of time of occurrence to generate fund transfer details between products by client (506).

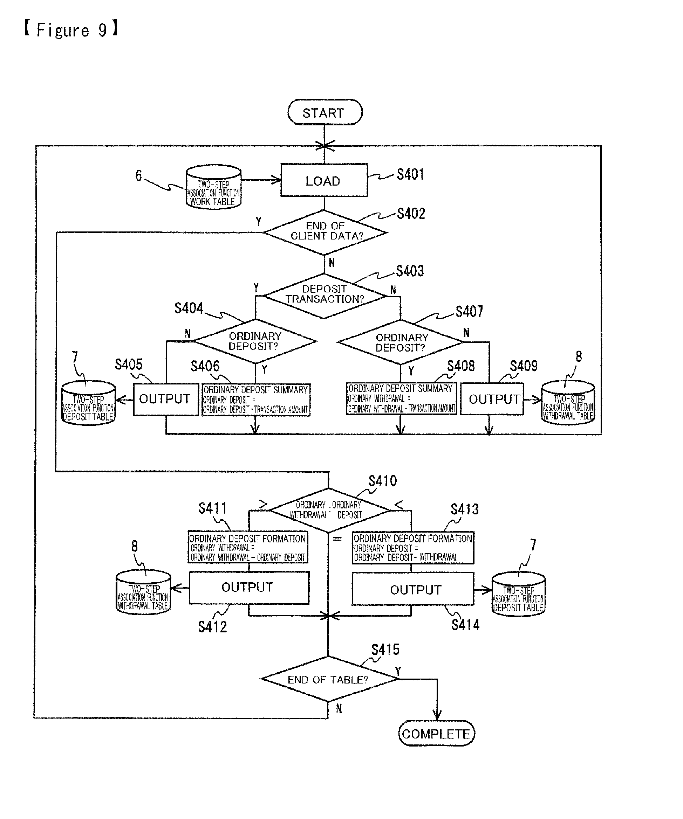

The following is further explained by referring to Figure 9. First the withdrawal transaction data is loaded from Two-step association function work table 6 (S401). Second it is determined whether or not transaction data is the end data of Two-step association function work table 6 (S402), and if considered to be the end data, then the processing is to be complete. If not considered to be the end data, then it is determined whether or not related to "ordinary deposit" (S403), and if not related to "ordinary deposit", then the transaction data is output to Two-step association function withdrawal table 8 (S404), which is followed by the stage S401 to load the next transaction data thereafter. The following is further explained by referring to Figure 9. First the transaction data is loaded from the Two-step association function work table 6 (S401) . Second it is determined whether or not transaction data is the end of data of the client (S402), and if not considered to be the end data of the client, then it is determined whether or not it is a deposit transaction (S403). If it is considered to be a deposit transaction, then it is determined whether or not it is related to "ordinary deposit" (S404), and if it is not related to "ordinary deposit", then the transaction data is output to the Two-step association function deposit table 7 (S405), which is followed by the stage S401 to load the next transaction data thereafter. At the stage of S404, if it is related to "ordinary deposit", then the transaction data is set to be "ordinary deposit = ordinary deposit + transaction amount" (S406), which is followed by the stage S401 to load the next transaction data.

At the stage of S403, if the transaction data is related to "ordinary deposit", a deposit transaction data is loaded from Two-step association function work table 6 (S405), and it is determined whether or not transaction data is the end of data of the client (S406), which is followed by the stage S401 to load the next transaction data if considered to be the end data of the client. On the other hand, if not considered to be the end data of the client, then it is determined whether or not related to "ordinary deposit" (S407) . If it is not related to "ordinary deposit", then the transaction data is output to Two-step association function deposit table 7 directly (S408), which is followed by the stage S405 to load the next transaction data from Two-step association function work table 6. At the stage of S403, if it is not considered to be the deposit transaction, it is determined whether or not it is related to "ordinary deposit" (S407). If it is not related to "ordinary deposit", then the transaction data is output to the Two-step association function withdrawal table 8 (S409), which is followed by the stage S401 to load the next transaction data thereafter. At the stage of S407, if it is related to "ordinary deposit", the transaction data is set to be "ordinary withdrawal = ordinary withdrawal + transaction amount" (S408), which is followed by the stage S405 to load the next transaction data.

At the stage of S407, if it is related to "ordinary deposit", then the deposit amount and the withdrawal amount are compared (S409), in order to change the transaction amount defined as follows:
When the deposit amount > the withdrawal amount, the transaction amount on "ordinary deposit" is changed to be "the transaction amount = the deposit amount - the withdrawal amount" (S410). Thereafter, the changed transaction amount is output to Two-step association function deposit table 7(S411), which is followed by the stage S405 to load the next transaction data from Two-step association function work table 6.
When the deposit amount < the withdrawal amount, the transaction amount on "ordinary deposit" is changed to be "the transaction amount = the withdrawal amount - the deposit amount" (S412). Thereafter, the changed transaction amount is output to Two-step association function withdrawal table 8 (S413), which is followed by the stage S405 to load the next transaction data from Two-step association function work table 6.
When the deposit amount = the withdrawal amount, then followed by the stage S405 directly to load the next transaction data from Two-step association function work table 6. At the stage of S402, if it is considered to be the end data of the client, then the deposit amount of the ordinary deposit and the withdrawal amount of the ordinary deposit are compared (S410), in order to form the ordinary deposit data defined as follows:
When the withdrawal amount of the ordinary deposit > the deposit amount of the ordinary deposit, the ordinary deposit data is formed to be "the withdrawal amount on ordinary deposit = the withdrawal amount on ordinary deposit - the deposit amount on ordinary deposit" (S411). Thereafter, the formed ordinary deposit data is output to Two-step association function withdrawal table 8 (S412), which is followed by the stage S415.
When the withdrawal amount of the ordinary deposit < the deposit amount of the ordinary deposit, the ordinary deposit data is formed to be "the deposit amount of the ordinary deposit = the deposit amount of the ordinary deposit - the withdrawal amount of the ordinary deposit" (S413). Thereafter, the formed ordinary deposit data is output to Two-step association function deposit table 7 (S414), which is followed by the stage S415.
When the withdrawal amount of the ordinary deposit = the deposit amount of the ordinary deposit, then followed by the stage S415 directly. Thereafter, it is determined whether or not the end of Two-step association function work table 6 (S415) , and if not considered to be the end, then followed by the stage S401 to load the next transaction data. On the other hand, if it is considered to be the end, then the processing is to be complete.

Referring again to Figure 1, the two-step association function deposit transaction data and the two-step association function withdrawal transaction data are split into ranges wherein individual transaction amounts match and matching transactions are associated one-to-one, and the one-to-one correspondences of deposit and withdrawal transactions are output to Transfer detail database 2 as fund transfer details between products by client (107108).

### EXPLANATION OF SYMBOLS

- 1.: Transaction history database 1
- 2.: Transfer detail database 2
- 3.: Work table
- 4.: Deposit table
- 5.: Withdrawal table
- 6.: Two-step association function work table
- 7.: Two-step association function deposit table
- 8.: Two-step association function withdrawal table

## Claims

1. A fund transfer information presentation system, wherein:
eventual output journal logs of a core banking system which are to be imported;
deposit and withdrawal transactions within a specified period, which are contained in the said journal logs, being extracted;
said deposit and withdrawal transactions being subject to name identification by client, which is followed by one-to-one chronological matching of deposit transaction data and withdrawal transaction data within the ranges wherein individual transaction amounts match;
the result of the said processing results in the generation of fund transfer details wherein product names of withdrawal transactions are stated as fund sources, product names of deposit transactions being stated as beneficiaries, and transfer amounts being stated as transaction amounts; and
said fund transfer details are able to track deposit asset trends for a client.

2. The fund transfer information presentation system according to claim 1, wherein:
in the processing of matching, when transaction amounts are not equivalent between a withdrawal transaction A and a deposit transaction B, in the case of A > B, the processing is to be conducted as follows:
first, the withdrawal transaction is separated into the transaction amount B denoted as Transaction 1, and the transaction amount (A - B) denoted as Transaction 2;
second, Transaction 1 is matched to the deposit transaction of an amount equal to the amount of B, and
finally Transaction 2 is matched to chronological records of the deposit transactions of an amount equal to the amount of (A - B).

3. The fund transfer information presentation system according to claim 1, wherein:
in the processing of matching, when the transaction amounts are not equivalent between the total withdrawal transaction and the total deposit transaction, a dummy transaction data "other" is formed by the differential value between the two amounts and allocated either to the withdrawal transactions or to the deposit transactions.

4. The fund transfer information presentation system according to claim 1, wherein:
in the processing of matching, when the dummy transactions are to be found on both sides of the withdrawal transactions and the deposit transactions, the processing is to be conducted as follows:
first, the dummy withdrawal transactions amounts denoted as A and the dummy deposit transactions amounts denoted as B are compared,
in the case of A = B, the dummy transaction data on both sides are deleted,
in the case of A > B, the dummy transaction data on the deposit side is deleted while the dummy transaction data on the withdrawal side is replaced with the dummy transaction amount A - B,
in the case of A < B, the dummy transaction data on the withdrawal side is deleted while the dummy transaction data on the deposit side is replaced with the dummy transaction amount B - A.

5. The fund transfer information presentation system according to claim 1, wherein:
in the processing of matching, when settlement-expected products are to be found on both sides of the withdrawal transactions and the deposit transactions, when ordinary deposits are found on both sides of the deposit transactions and withdrawal transactions, the processing is to be conducted as follows:
first, the transaction amounts of settlement-expected product on the withdrawal side denoted as A is compared to the settlement-expected product on the deposit side denoted as B,
concurrently comparing the transaction amounts between the settlement-expected product on withdrawal side denoted as A and the settlement-expected product on deposit side denoted as B,
in the case of A = B, transaction data on both sides are deleted,
in the case of A > B, the transaction data on the deposit side is deleted while the transaction data on the withdrawal side is replaced such that the transaction amount is A - B,
in the case of A < B, the transaction data on the withdrawal side is deleted while the transaction data on the deposit side is replaced such that the transaction amount is B - A.
